Europäisches Patentamt

European Patent Office

Office européen des brevets

(19)

(11) Veröffentlichungsnummer: **0 022 123**
**B 1**

(12) **EUROPÄISCHE PATENTSCHRIFT**

(45) Veröffentlichungstag der Patentschrift:
09.02.83

(51) Int. Cl.³: **B 23 K 11/32**, B 23 K 11/06

(21) Anmeldenummer: 80890062.5

(22) Anmeldetag: 04.06.80

(54) Elektrodenanordnung an einer Gitterschweissmaschine.

(30) Priorität: 12.06.79 AT 4184/79

(43) Veröffentlichungstag der Anmeldung:
07.01.81 Patentblatt 81/1

(45) Bekanntmachung des Hinweises auf die Patenterteilung:
09.02.83 Patentblatt 83/6

(84) Benannte Vertragsstaaten:
BE CH DE FR GB IT LI

(56) Entgegenhaltungen:
FR-A-446 542
FR-A-2 227 914
FR-A-2 387 709
GB-A-458 334
US-A-3 115 570

(73) Patentinhaber: EVG Entwicklungs- u. Verwertungs-Gesellschaft m.b.H., Vinzenz-Muchitsch-Strasse 36, A-8011 Graz (AT)

(72) Erfinder: Schmidt, Gerhard, Dipl.-Ing., Rosengasse 7, A-8042 Graz (AT)
Erfinder: Ritter, Klaus, Dipl.-Ing., Peterstalstrasse 157, A-8042 Graz (AT)
Erfinder: Ritter, Gerhard, Dipl.-Ing. Dr., Unterer Plattenweg 47, A-8043 Graz (AT)

(74) Vertreter: Holzer, Walter, Dipl.-Ing. Patentanwälte et al, Dipl.-Ing. Dr.techn. Schütz Alfred Dipl.-Ing. Dr.techn. Pfeifer Rudolf Dr.phil. Mrazek Engelbert Dipl.-Ing. Holzer Walter Dipl.-Ing. Pfeifer Otto Fleischmanngasse 9, A-1040 Wien (AT)

## Elektrodenanordnung an einer Gitterschweißmaschine

Die Erfindung betrifft eine Elektrodenanordnung an einer nach der elektrischen Widerstandsschweißmethode arbeitenden Gitterschweißmaschine mit schrittweisem Drahtvorschub und damit synchronisierter Anstellbewegung von mindestens einer der Elektroden an die Drahtkreuzungspunkte, mit einem Elektrodenhalter und einer in diesen einsetzbaren Schweißelektrode, welche den Schweißstrom vom Elektrodenhalter zum Drahtkreuzungspunkt überträgt.

Beim Punktschweißen nach der elektrischen Widerstandsmethode werden die das Schweißgut berührenden Kontaktflächen der Elektroden durch die beim Schweißvorgang auftretende Erhitzung und den erforderlichen Schweißdruck sehr stark abgenützt. Sobald die Kontaktflächen der Elektroden zufolge der Hitze- und Druckeinwirkungen ihre Form zu verändern beginnen, erfolgt die Stromübertragung nicht mehr einwandfrei und es treten Fehlschweißungen auf.

Aus diesem Grunde werden die Elektroden häufig mit Einsätzen versehen, die bei Auftreten von Abnützungserscheinungen rasch ausgewechselt werden können (US-A-2 663 783).

Es ist ferner bekannt, die Schweißelektrode einer insbesondere zum Punktschweißen von Aluminiumblechen bestimmten Schweißmaschine als kreiszylindrische Scheibe auszubilden und diese Scheibenelektrode derart an einem Elektrodenhalter zu lagern, daß sie nach jedem Schweißvorgang durch eine Schrittschaltvorrichtung automatisch um einen Drehwinkelschritt weitergeschaltet werden kann, so daß beim Schweißen einer Punktreihe jeweils ein anderer Teil der Kontaktfläche der Scheibenelektrode mit dem Schweißgut in Berührung kommt und so die Standzeit der Elektrode erheblich verlängert wird (US-A-4 079 223).

Weiters ist es auch schon bekannt, bei Gitterschweißmaschinen, bei welchen das Schweißgut mit gleichförmiger Geschwindigkeit fortbewegt wird, die Elektroden ähnlich wie bei Nahtschweißmaschinen als kreiszylindrische, frei drehbar gelagerte und federnd gegeneinander gedrückte Rollen auszubilden, zwischen welchen die Drähte für das herzustellende Gitter hindurchgezogen werden, wobei die Rollenelektroden durch die sich fortbewegenden Längsdrähte des Gitters auf Drehung mitgenommen werden. Auch in diesem Falle werden bei den aufeinanderfolgenden Punktschweißvorgängen stets andere Kontaktflächenbereiche der Elektroden beansprucht (US-A-2 487 392). Allerdings müssen bei solchen Gitterschweißmaschinen die Querdrähte in der Nähe aller Drahtkreuzungspunkte relativ zu den Längsdrähten festgehalten werden, damit sie nicht durch die bei den Drahtkreuzungspunkten auf den Querdraht auflaufenden Rollen verschoben werden; überdies muß durch Abstandhalter für die Elektroden oder durch eine Taktung der Schweißströme verhindert werden, daß die federnd gegeneinander gedrückten Rollenelektroden im Bereich der zwischen den Drahtkreuzungspunkten liegenden Längsdrahtabschnitte kurzgeschlossen werden.

Schließlich ist eine insbesondere für die Blechschweißung an schwer zugänglichen Stellen des Werkstücks bestimmte Elektrodenanordnung bekannt, bei welcher die beiden Elektroden ebenfalls rotationssymmetrisch ausgebildet sind, nämlich in Form eines Doppelkugelstumpfes und eines Zylinders mit kegeliger Spitze, wobei die Elektrodenachsen in einer gemeinsamen Normalebene zur gedachten Schweißebene liegen. Die beiden Elektroden sind während der Schweißung undrehbar, können aber zur Nachstellung nach der Schweißung um einen wählbaren Winkel um ihre Achsen weitergedreht und wieder festgeklemmt werden (US-A-3 115 570). Da die kegeligen Stirnflächen dieser bekannten, relativ komplizierten Elektroden in ähnlicher Weise wie die zylindrischen Umfangsflächen von nicht rollenden Scheibenelektroden zusammenwirken, würde sich eine solche Elektrodenanordnung bei der Gitterschweißung ähnlich wie eine Elektrodenanordnung mit nicht rollenden Scheibenelektroden verhalten.

Bei Gitterschweißmaschinen mit schrittweisem Drahtvorschub und damit synchronisierter Anstellbewegung der Elektroden an die Drahtkreuzungspunkte würde die Verwendung von Rollenelektroden oder von analog angeordneten kreiszylindrischen, nicht rollenden Scheibenelektroden die Gefahr mit sich bringen, daß der zur Rollenachse parallele Gitterdraht unter dem Schweißdruck in Richtung senkrecht zu seiner Achsrichtung verdrängt wird, wenn nicht aufwendige konstruktive Maßnahmen zur Festhaltung des betreffenden Drahtes an allen Kreuzungspunkten vorgesehen werden. Weicht nämlich die Verbindungslinie zwischen der Drahtachse und der Rollen- bzw. Scheibenachse auch nur geringfügig von der Druckrichtung der Elektrode ab, so entsteht eine senkrecht zur Achsrichtung des betreffenden Drahtes gerichtete Kraftkomponente, durch welche der Draht in seitlicher Richtung verdrängt wird.

Die Erfindung befaßt sich nun mit der Aufgabe, einen Elektrodenhalter mit einer einsetzbaren Schweißelektrode so auszubilden und an einer nach der elektrischen Widerstandsschweißmethode arbeitenden Gitterschweißmaschine mit schrittweisem Drahtvorschub und damit synchronisierter Anstellbewegung von zumindest einer der Elektroden an die Drahtkreuzungspunkte so anzuordnen, daß die Schweißelektrode eine vergleichbar große Standzeit wie die bereits geschilderten Rollen- oder Scheibenelektroden gewährleistet, dabei aber frei von der Tendenz ist, einen der zu verschweißenden Drähte im Drahtkreuzungspunkt zu verdrängen bzw. zu verlagern.

Diese Aufgabe wird erfindungsgemäß dadurch gelöst, daß die einsetzbare Schweißelektrode lediglich zu Nachstellzwecken als eine um ihre Achse drehbar am Elektrodenhalter angeordnete und in wählbarer Drehwinkellage an diesem fixierbare kreiszylindrische Scheibe ausgebildet ist, deren Achse unter einem spitzen Winkel zu den Achsrichtungen der einander kreuzenden Gitterdrähte verläuft.

Durch die Schrägstellung der Scheibenelektrode bezüglich der zu verschweißenden Gitterdrähte wird erreicht, daß sich bei einer begrenzten Parallelverschiebung des anliegenden Gitterdrahtes in der Gitterherstellungsebene dieser Draht entlang einer Erzeugenden der Scheibenelektrode bewegt. Da der Abstand dieser Erzeugenden von der Gitterherstellungsebene überall gleiche Größe hat, wird eine das Auftreten einer eine allfällige Abweichung des Drahtes von seiner Sollage vergrößernden Kraftkomponente vermieden.

Bei einer Gitterschweißmaschine, bei welcher die Querdrähte abwechselnd oberhalb und unterhalb der Längsdrähte zugeführt werden, wird die Erfindung auf beide Schweißelektroden jedes zusammenwirkenden Elektrodenpaares angewendet, um eine ungewollte Querdrahtverschiebung sowohl an der Oberseite als auch an der Unterseite der Längsdrähte zu vermeiden.

Aber selbst dann, wenn auf den unteren Schweißelektroden stets Längsdrähte aufruhen, empfiehlt es sich, für diese ebenfalls Scheibenelektroden in der erfindungsgemäßen Schrägstellung anzuwenden, weil sich hierdurch wieder eine längere Standzeit erzielen läßt. Bei einer nach Art einer Rolle bezüglich eines Längsdrahtes ausgerichteten, also bezüglich der Drahtachse nicht schräggestellten Scheibenelektrode wird nämlich vom anliegenden Längsdraht durch Abnützung in die Mantel- oder Kontaktfläche eine peripher verlaufende Nut eingearbeitet, bei einer schräg gestellten Scheibenelektrode hingegen eine schräge Nut. Im letzteren Fall genügt eine erheblich kleinere Winkelversetzung der Scheibenelektrode als im ersten Fall, um dem Längsdraht nach örtlicher Scheibenabnützung wieder eine nicht verformte Kontaktfläche anzubieten, d. h. schräg gestellte Scheibenelektroden können in eine erheblich größere Anzahl von Drehwinkellagen gebracht werden, in welchen sie wieder neuwertig verwendbar sind.

Die Erfindung wird nun unter Bezugnahme auf die Zeichnung an einem Ausführungsbeispiel genauer erläutert. Es zeigt

Fig. 1 die erfindungsgemäße Ausbildung und Anordnung zweier zusammenwirkender Schweißelektroden an einer Gitterschweißmaschine in schematischer Seitenansicht,

Fig. 2 einen Querschnitt nach der Linie II-II in Fig. 1 und

Fig. 3 eine Draufsicht auf die untere Elektrode.

Der Zeichnung ist eine Gitterschweißmaschine zugrunde gelegt, die mit einem schrittweisen, jeweils eine Querdrahtteilung erfassenden Drahtvorschub in Richtung des Pfeiles P1 arbeitet und bei welcher jeweils dann, wenn sich ein Kreuzungspunkt K eines Längsdrahtes L und eines Querdrahtes Q zwischen einem Paar zusammenwirkender Schweißelektroden befindet, eine Anstellbewegung der oberen Elektrode im Sinne des Pfeiles P2 gegen den von den unteren Elektroden abgestützten Drahtkreuzungspunkt erfolgt.

Der Halter 1 der oberen Elektrode 2 wird von einem in einer nicht gezeigten Führung verschiebbaren Stößel 3 getragen, der mittels einer auf einem Bund 4 aufsitzenden Druckfeder 5 von einem für alle Elektroden gemeinsamen, nicht dargestellten Elektrodenbalken nach unten gedrückt werden kann, um die Elektrode 2 gegen den Drahtkreuzungspunkt zu pressen, und nach erfolgter Schweißung zwecks Abhebens der Elektrode 2 wieder zurückgezogen werden kann.

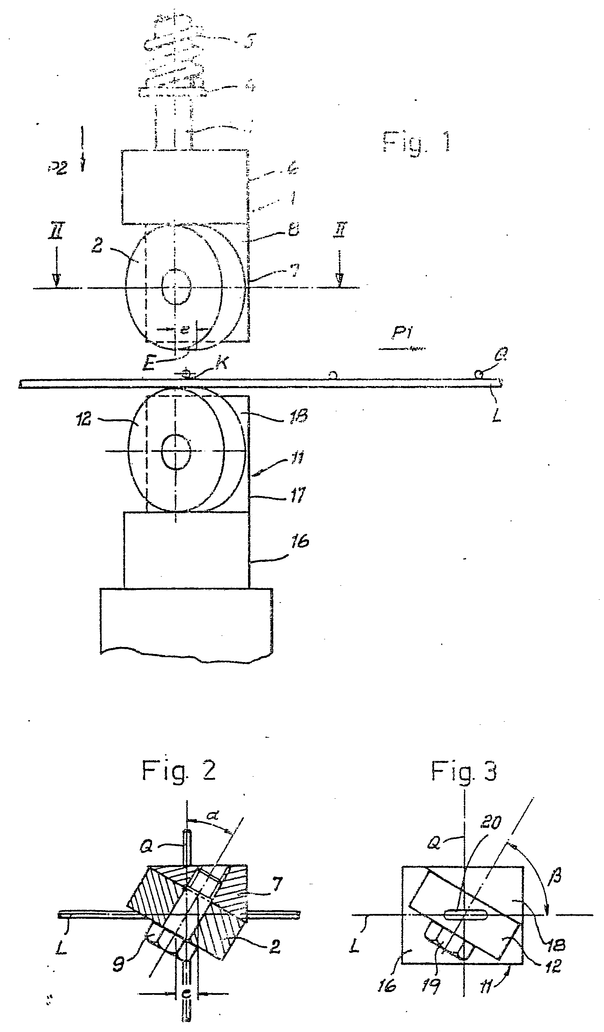

Während der Oberteil 6 des Elektrodenhalters 1 im gezeigten Beispiel quaderförmig ausgebildet ist, hat der Unterteil 7 die Form eines Prismas mit dreieckigem Querschnitt, wie insbesondere in Fig. 2 erkennbar ist. An Anlage an der schrägen Hauptfläche 8 dieses Prismas ist die als kreiszylindrische Scheibe ausgebildete Schweißelektrode 2 mittels einer in ein Gewindeloch im Halterunterteil 7 eingreifenden Klemmschraube 9 fixiert, u. zw. in solcher Lage, daß die Mitte der untersten Erzeugenden E des Kreiszylindermantels der Elektrode 2 mit der Achse des Stößels 3 und der durch die Längs- und Querdrahtzubringer bestimmten Sollage des zugeordneten Drahtkreuzungspunktes K fluchtet. Die Klemmschrauben sind in Fig. 1 der Einfachheit halber weggelassen.

Wie Fig. 1 zeigt, entspricht der Projektion der Erzeugenden E auf die Längsdrähte eine Strecke e; innerhalb dieser Strecke könnte sich jeder Querdraht Q in einem Kreuzungspunkt K parallel zu sich selbst auf den Längsdrähten verschieben, ohne daß seitens der Scheibenelektrode 2 auf ihn eine die ungewollte Verschiebung vergrößernde Kraftkomponente ausgeübt wird.

Die obere Scheibenelektrode 2 ist im dargestellten Ausführungsbeispiel so schräg gestellt, daß ihre Achse mit der Achse des zugeordneten Querdrahtes Q einen spitzen Winkel $\alpha$ von etwa 30° einschließt; dieser Winkel kann innerhalb erheblicher Grenzen variiert werden, soll aber vorzugsweise zwischen 30 und 60° liegen. Mit kleiner werdendem Winkel werden, wie aus Fig. 2 unmittelbar erkennbar ist, die erforderlichen Abmessungen der Elektroden in Querdrahtrichtung kleiner, so daß die Elektroden auf der Schweißlinie näher aneinandergerückt werden können, wie dies bei der Herstellung engmaschiger Gitter erforderlich ist.

Die untere Elektrode ist gemäß den Fig. 1 und 3 ähnlich der oberen Elektrode aufgebaut, jedoch mit ihrem quaderförmigen Teil 16 fest an einer Stromschiene od. dgl. montiert. Alle Bestandteile der unteren Elektrodeneinheit sind mit den Bezugszeichen der entsprechenden Bestandteile der oberen Elektrode, vermehrt um 10, bezeichnet. Fig. 3 läßt erkennen, daß die Achse der unteren Scheibenelektrode 12 mit der Achse des zugeordneten Längsdrahtes L einen Winkel β einschließt, der komplementär dem Winkel α ist, so daß die beiden Elektrodenachsen parallel zueinander verlaufen und daher die beiden Scheibenelektroden 2 und 12, bezogen auf die Längsdrähte L, gleichsinnig schräg gestellt sind. Ebenso gut kann aber auch eine gegensinnige Schrägstellung der beiden Scheibenelektroden bezüglich der Längsdrähte L angewendet werden.

In der Draufsicht nach Fig. 3 ist erkennbar, daß vom Längsdraht L in die Kontakt- oder Mantelfläche der unteren Scheibenelektrode 12 durch Abnützung eine schräge Nut 20 eingearbeitet wird. Analog wird durch die Querdrähte Q in die Kontaktfläche der oberen Scheibenelektrode 2 eine schräge Nut eingearbeitet. Sobald diese Nut ein bestimmtes Ausmaß erreicht hat, wird die Klemmschraube 9 bzw. 19 gelöst und die Scheibenelektrode 2 bzw. 12 um einen solchen Winkel um ihre Achsen gedreht, daß die genutete Zone durch eine eng benachbarte, noch nicht abgenutzte Kontaktflächenzone abgelöst wird, worauf die Klemmschraube wieder angezogen wird.

**Patentansprüche**

1. Elektrodenanordnung an einer nach der elektrischen Widerstandsschweißmethode arbeitenden Gitterschweißmaschine mit schrittweisem Drahtvorschub und damit synchronisierter Anstellbewegung von mindestens einer der Elektroden (2 bzw. 12) an die Drahtkreuzungspunkte, mit einem Elektrodenhalter (1 bzw. 11) und einer in diesen einsetzbaren Schweißelektrode (2 bzw. 12), welche den Schweißstrom vom Elektrodenhalter (1 bzw. 11) zum Drahtkreuzungspunkt (K) überträgt, dadurch gekennzeichnet, daß die einsetzbare Schweißelektrode (2 bzw. 12) lediglich zu Nachstellzwecken als eine um ihre Achse drehbar am Elektrodenhalter (1 bzw. 11) angeordnete und in wählbarer Drehwinkellage an diesem fixierbare kreiszylindrische Scheibe (2; 12) ausgebildet ist, deren Achse unter spitzen Winkeln (α, β) zu den Achsrichtungen der einander kreuzenden Gitterdrähte (Q, L) verläuft.

2. Elektrodenanordnung nach Anspruch 1, dadurch gekennzeichnet, daß die Achse der kreiszylindrischen Scheibe (2) mit den Achsrichtungen der einander kreuzenden Gitterdrähte Winkel im Bereich von 30 bis 60° einschließt.

3. Elektrodenanordnung nach Anspurch 1 oder 2, dadurch gekennzeichnet, daß die kreiszylindrische Scheibe (2) in Anlage an einer Schrägfläche (8) des Elektrodenhalters (1) mittels einer Klemmschraube (9) fixierbar ist.

4. Anwendung der Elektrodenanordnung nach einem der Ansprüche 1 bis 3 zur Verschweißung von abwechselnd oberhalb und unterhalb der Längsdrähte zugeführten Querdrähten.

**Claims**

1. Electrode device in a lattice welding machine operating according to the electrical resistance welding method, comprising stepwise feeding of the wires and synchronized therewith an adjusting movement of at least one of the electrodes (2 and 12, respectively) at the wire crossover points, an electrode holder (1 and 11, respectively) and a welding electrode (2 and 12, respectively) adapted to be inserted thereinto, which transmits the welding current from the electrode holder (1 and 11, respectively) to the wire crossover point (K), characterized in that the insertable welding electrode (2 and 12, respectively) is formed merely for the purpose of adjustment as a circular cylindrical disc (2; 12) disposed on the electrode holder (1 and 11, respectively) for rotation about its axis and adapted to be fixed to said electrode holder in a selective angular position, the disc axis extending at acute angles (α, β) to the axial directions of said lattice wires (Q, L) crossing one another.

2. Electrode device according to claim 1, characterized in that the axis of said circular cylindrical disc (2) forms angles in the range of 30 to 60° with the axial directions of said lattice wires crossing one another.

3. Electrode device according to claim 1 or 2, characterized in that said circular cylindrical disc (2) is bearing against an oblique surface (8) of said electrode holder (1) and is adapted to be fixed against this surface by means of a clamping screw (9).

4. Use of the electrode device according to one of the claims 1 to 3 for the welding of transverse wires fed alternately above and below the longitudinal wires.

**Revendications**

1. Montage d'électrodes pour une soudeuse de treillis électrique par résistance présentant un avancement pas à pas des fils et un mouvement d'application d'au moins une des électrodes (2 ou 12) sur les points de croisement des fils, et comportant un porte-électrode (1 ou 11) et une électrode de soudage (2 ou 12) qui peut être installée dans ce porte-électrode et qui transmet le courant de soudage du porte-électrode (1 ou 11) au point de croisement des fils (K), caractérisé en ce que l'électrode de soudage à installer (2 ou 12) est réalisée, simplement à des fins de postréglage, sous la forme d'un disque cylindrique circulaire (2, 12) pouvant torner autour de son axe, monté sur le porte-électrode (1 ou 11) et pouvant être fixé à celui-ci dans une position de rotation ou angulaire qui peut être choisie, l'axe de ce disque formant un angle aigu (α, β) avec les directions axiales des fils (Q, L) du treillis qui se croisent.

2. Montage d'électrodes suivant la revendication 1, caractérisé en ce que l'axe du disque cylindrique circulaire (2) forme avec les directions axiales des fils du treillis qui se croisent, un angle compris entre 30 et 60°.

3. Montage d'électrodes suivant la revendication 1 ou 2, caractérisé en ce que le disque cylindrique circulaire (2) peut être fixé au moyen d'une vis de serrage (9) en contact avec une surface oblique (8) du porte-électrode (1).

4. Utilisation du montage d'électrodes suivant l'une quelconque des revendications 1 à 3, pour souder des fils transversaux amenés alternativement audessus et en dessous des fils longitudinaux.

Fig. 1

Fig. 2

Fig. 3